(19) **Europäisches Patentamt / European Patent Office / Office européen des brevets**

(11) **EP 1 860 529 A1**

(12) # DEMANDE DE BREVET EUROPEEN

(43) Date de publication:
**28.11.2007 Bulletin 2007/48**

(51) Int Cl.:
**G06F 3/033** (2006.01)

(21) Numéro de dépôt: **07108367.9**

(22) Date de dépôt: **16.05.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **24.05.2006 FR 0604691**

(71) Demandeur: **STMICROELECTRONICS SA**
**92120 Montrouge (FR)**

(72) Inventeurs:
• **Mellot, Pascal**
  **38250, LANS en VERCORS (FR)**
• **Glais, Arnaud**
  **38000, GRENOBLE (FR)**

(74) Mandataire: **Cabinet Plasseraud**
**52 rue de la Victoire**
**75440 Paris Cedex 09 (FR)**

(54) **Souris a gain variable**

(57) Un dispositif de capture de mouvement (21) destiné à communiquer avec un dispositif hôte (28) en vue d'une saisie du mouvement capturé, comprenant des moyens de pondération (29) pour pondérer des mesures de déplacement par un gain, et des moyens d'ajustement du gain (31) en fonction au moins d'une vitesse du dispositif de capture.

FIG. 2

EP 1 860 529 A1

**Description**

La présente invention est relative aux dispositifs de capture du mouvement coopérant avec un dispositif hôte en vue d'une saisie du mouvement capturé, en particulier et de façon non limitative aux souris destinées à communiquer avec un ordinateur.

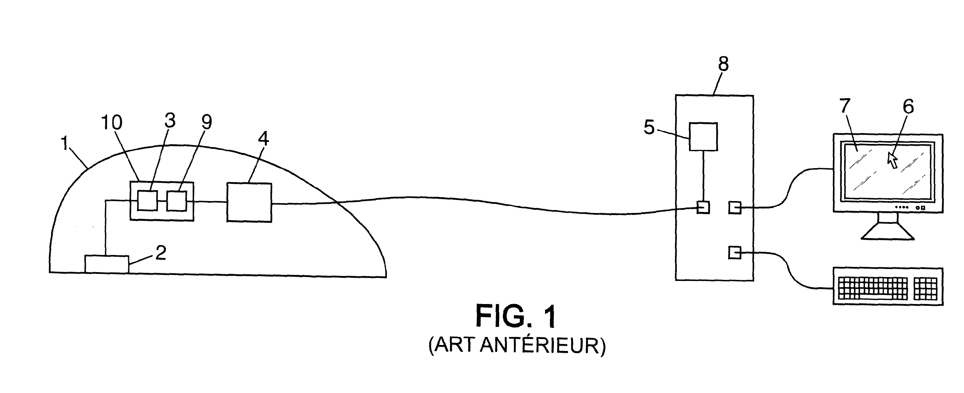

La figure 1 montre un exemple de système connu de capture et d'affichage du mouvement. Un dispositif 1, par exemple une souris optique, comprend des moyens de mesure 2, 3 comprenant par exemple une lentille et un capteur représentés sous la référence 2. Le capteur capture des images, qu'il transmet à des moyens de détermination de déplacement 3. Ces moyens 3 comparent les images reçues pour déterminer un déplacement entre des images successives.

Le déplacement est classiquement mesuré suivant deux dimensions. Dans le présent exposé, par « déplacement », « points », « coups», « mesure de déplacement », « nombre de pixels » etc., on entend donc classiquement des doublets de valeurs, par exemple (X, Y). Bien entendu, les notions de « déplacement », « points » etc. peuvent également correspondre à des triplets de valeurs, dans le cas de mesures suivant 3 dimensions, ou bien encore à des singletons, dans le cas de mesures suivant une dimension.

Chaque déplacement est comptabilisé en coups, chaque coup correspondant à un $32^{ème}$ de point.

Par exemple, si le capteur associe un point à une distance de 30 $\mu m$, et que la lentille présente un gain de 2, alors les moyens de détermination 3 associent un point à un déplacement réel de 60 $\mu m$.

Un déplacement de 25,4 mm (un pouce) dans une direction donnée correspond ainsi à la valeur entière

de $\dfrac{25,4}{2*30*10^{-3}}*32$, soit 13546 coups.

Des moyens de pondération 9 pondèrent le nombre de coups par un gain motion_scaling. Un décalage du registre correspondant conduit à diviser le résultat par 256. Soit pour un gain motion_scaling de 8, un paramètre CPI (de l'anglais "counts per inch") égal à la valeur entière de $13546*\dfrac{8}{256}$, soit 423 coups par pouce.

Les moyens 3, 9, peuvent être intégrés dans des mêmes moyens de traitement, par exemple un processeur 10.

A chaque déplacement, et pour chaque direction x,y, les coups pondérés sont transmis à un accumulateur 4 qui additionne le nombre de coups transmis à un nombre de coups accumulés.

Les valeurs X, Y mémorisées dans l'accumulateur 4 sont régulièrement lues, tronquées, puis transmises à un registre d'un processeur 5 d'un dispositif hôte, par exemple une unité centrale 8, en utilisant par exemple un bus USB. Dans le cas d'une souris sans fil, un protocole de communication sans fil peut être prévu pour la transmission de chaque nombre de coups accumulés au processeur de l'unité centrale.

Après chaque lecture, la valeur tronquée, c'est-à-dire arrondie, est retranchée à la valeur mémorisée dans l'accumulateur 4. L'accumulateur 4 continue ainsi de recevoir des valeurs de nombre de coups pondérés entre deux lectures.

Un programme pilote ("driver" en anglais) mis en oeuvre par le processeur 5 peut être utilisé pour amplifier chaque valeur de nombre de coups accumulés reçue d'un facteur donné. Le programme pilote permet également de déplacer sur un écran 7 un pointeur 6 d'un nombre de pixels sensiblement proportionnel à chaque valeur amplifiée et dans la direction correspondante. Les mouvements du pointeur 6 sur l'écran sont ainsi sensiblement proportionnels au mouvement capturé par les moyens de capture 2.

Pour un facteur égal à 1, chaque coup transmis se traduit par un déplacement apparent d'un pixel à l'écran. Le facteur peut être supérieur ou inférieur à 1.

Avec l'amélioration de la résolution des écrans, la quantité de pixels par écran tend à augmenter. Afin d'éviter une diminution du déplacement apparent du pointeur à l'écran pour un déplacement de la souris donné, le nombre de pixels pour un déplacement réel donné tend aussi à augmenter.

Pour augmenter le nombre de pixels correspondant à un déplacement donné, on peut augmenter le facteur appliqué par le programme pilote au niveau du dispositif hôte et/ou le paramètre CPI appliqué au niveau de la souris 1.

Il n'existe pas à l'heure actuelle de standard imposant la valeur du gain global (ou paramètre CPI) appliqué par la souris. Le gain motion_scaling peut même être programmable, de sorte que la valeur du paramètre CPI peut être choisie relativement librement par le constructeur de la souris.

Ainsi, en quelques années, une valeur courante du paramètre CPI des souris est passée de grossièrement 400 CPI à grossièrement 800 CPI. On envisage des souris avec un paramètre CPI autour de 1600 CPI, voire 3200 CPI pour des écrans haute résolution ou certaines applications de jeux vidéo.

Toutefois, la valeur du nombre de coups accumulés mémorisée dans l'accumulateur peut alors croître relativement rapidement.

Le canal permettant la transmission de la valeur mémorisée dans l'accumulateur vers le dispositif hôte a une bande passante limitée. Ainsi, la lecture de la valeur mémorisée dans l'accumulateur s'effectue avec une fréquence de rafraîchissement ("report rate" en anglais) maximale prédéterminée.

Par exemple, dans le cas d'un port USB, la spécification HID (de l'anglais "Human Interface Device") autorise une lecture sur 8 octets toutes les 8 millisecondes. Parmi ces 8 octets, quatre sont dédiés à la transmission d'informations de clicks de boutons (non représentés) de la souris. Les quatre octets restants sont dédiés à la transmission des valeurs mémorisées dans l'accumulateur. Ainsi, pour chaque direction x, y, deux octets de 8 bits peuvent être transmis toutes les 8 millisecondes.

Dans le cas d'un port PS2, on est limité à 4 octets toutes les 8 millisecondes.

Dans le cas d'une transmission utilisant une technologie sans fil à 27 MHz, la bande passante peut être proche de celle de la spécification HID, compte tenu de l'encodage à réaliser pour se protéger des erreurs. Par exemple, pour une souris sans fil capable de transmettre toutes les 10 millisecondes 8 bits signés de données pour chaque direction x, y, 127 coups (positifs ou négatifs) peuvent être transmis toutes les 10 millisecondes, soit 12700 coups par seconde. Pour une valeur du paramètre CPI de 400 CPI, cette limitation correspond à une vitesse maximale de la souris dans une direction x

ou y de $\dfrac{12700}{400} * 25,4.10^{-3}$ mètre par seconde, soit sensiblement 0,8 m/s. Pour une valeur du paramètre CPI de 1600 CPI, la vitesse maximale dans une direction x ou y tombe à sensiblement 0,2 m/s. Si l'utilisateur déplace la souris plus rapidement, la transmission au dispositif hôte rencontre des problèmes de saturation. Cette limitation peut devenir gênante pour certaines applications, par exemple pour des applications de jeux vidéo.

Une solution peut consister à choisir un paramètre CPI relativement faible, et un facteur à appliquer par le programme pilote relativement élevé. Ce facteur peut être modifié relativement facilement via une interface utilisateur. Ainsi, pour afficher à l'écran un déplacement donné du pointeur, on évite de contraindre un utilisateur de la souris à déplacer la souris sur des distances relativement élevées. On évite également les problèmes liés à la saturation lors de la transmission du nombre de coups accumulés de la souris vers le dispositif hôte.

Toutefois, les déplacements affichés risquent d'être peu précis. En effet, le nombre de coups correspondant à un déplacement donné est relativement faible, de sorte que ce déplacement est traduit en nombre de coups de façon grossière seulement. De plus, si le facteur du programme pilote est relativement élevé, le déplacement apparent minimum, correspondant à un coup, peut être supérieur au pixel.

Il est également connu de prévoir un facteur à appliquer par le programme pilote variable. En cas de détection d'une accélération, le facteur diminue. Toutefois, cette solution ne permet pas de s'affranchir de la perte de précision liée à la conversion en nombre de coups. Lorsque aucune accélération n'est détectée, le facteur peut être relativement élevé, ce qui accroît la perte de précision. De plus, la détection d'une accélération par des moyens logiciels de l'ordinateur peut conduire à des artefacts à l'écran, par exemple des changements de direction du pointeur relativement brusques.

La présente invention vise à remédier aux inconvénients susmentionnés. Elle propose de prévoir un paramètre CPI variable selon la valeur de la vitesse du dispositif de capture.

Selon un premier aspect, l'invention a pour objet un dispositif de capture de mouvement destiné à communiquer avec un dispositif hôte en vue d'une saisie du mouvement capturé, comprenant des moyens de pondération pour pondérer des mesures de déplacement par un gain, et des moyens d'ajustement du gain en fonction au moins d'une vitesse du dispositif de capture.

On peut ainsi prévoir de diminuer le gain lorsque le dispositif de capture, par exemple une souris, capture un mouvement relativement rapide. On évite ainsi les problèmes liés à une saturation lors d'une transmission au dispositif hôte.

Lorsque le dispositif de capture capture un mouvement relativement lent, le gain peut être relativement élevé. Le mouvement saisi, se traduisant par exemple par le déplacement apparent d'un pointeur sur un écran du dispositif hôte, est ainsi relativement élevé. Dans le cas d'un écran comprenant un relativement grand nombre de pixels, on évite ainsi une diminution du déplacement apparent du pointeur à l'écran pour un déplacement de la souris donné. De plus, la précision reste relativement élevée. En effet, d'une part la perte de précision due à une quantification du mouvement en nombre de coups est relativement faible. Et d'autre part le facteur appliqué par le dispositif hôte peut être relativement faible, de sorte qu'on peut éviter des déplacements minimums à l'écran supérieurs au pixel. Dit autrement, chaque pixel de l'écran peut être atteint par le pointeur.

Avantageusement, les moyens d'ajustement du gain sont agencés pour modifier le gain en fonction d'au moins une mesure de déplacement précédemment acquise.

En effet, si l'acquisition des mesures est effectuée à intervalles réguliers, la vitesse du dispositif de capture et la ou les mesures sont sensiblement proportionnelles. Bien entendu, d'autres indicateurs de la vitesse peuvent être utilisés pour ajuster le gain du dispositif de capture.

Avantageusement, les moyens d'ajustement du gain sont agencés pour modifier le gain en fonction d'une somme d'une pluralité de mesures de déplacement précédemment acquises. Cela correspond à un filtrage passe-bas (ou moyennage), qui permet d'éviter des variations du gain dues à une sensibilité excessive.

Alternativement, le gain peut être réajusté à partir d'une seule mesure de déplacement.

Avantageusement, le dispositif de capture comprend un accumulateur relié aux moyens de pondération, l'accumulateur permettant de recevoir des mesures de déplacement pondérées et de mémoriser une mesure de déplacement accumulée. Des moyens de communication comprenant un registre de transmission agencé pour recevoir une mesure de déplacement accumulée lue dans l'accumulateur sont prévus. Les moyens de communication sont agencés pour communiquer au dispositif hôte la valeur reçue dans le registre de transmission.

En effet, les dispositifs de capture de type souris existants intègrent classiquement l'accumulateur et de tels moyens de communication. On peut ainsi par exemple obtenir des souris selon le premier aspect de l'invention relativement facilement, en modifiant par exemple un programme d'ordinateur destiné à être exécuté par un processeur de souris.

Classiquement, la valeur lue dans l'accumulateur et reçue dans le registre de transmission est tronquée, et cette valeur tronquée est soustraite à la valeur mémorisée dans l'accumulateur. Les moyens de pondération étant situés en amont de l'accumulateur, une résolution relativement élevée peut être conservée du fait que la pondération s'applique aux valeurs non tronquées.

La présente invention n'est bien entendu pas limitée par l'une ou l'autre de ces caractéristiques, à savoir l'accumulateur, le registre de transmission ou les moyens de communication. Par exemple, les mesures pondérées peuvent être communiquées une à une au dispositif hôte, sans accumulation préalable dans un accumulateur.

Avantageusement, les moyens d'ajustement du gain sont reliés au registre de transmission, afin de modifier le gain en fonction d'au moins une mesure lue dans l'accumulateur. Ainsi, le gain est réajusté à chaque transmission au dispositif hôte, tandis qu'une pluralité de mesures de déplacement sont acquises entre deux transmissions.

Alternativement, les moyens d'ajustement peuvent ne pas être reliés directement au registre de transmission. On peut par exemple prévoir une lecture régulière de l'accumulateur par les moyens d'ajustement eux-mêmes, indépendamment de la lecture de l'accumulateur effectuée en vue de la transmission au dispositif hôte.

L'invention n'est pas limitée par la mise en oeuvre de la communication avec le dispositif hôte : par exemple un port PS2, un port USB ou des moyens de communication sans fil (liaison radio, Bluetooth, infrarouge...) peuvent être utilisés. Dans le cas d'une souris, celle-ci peut bien entendu être à fil ou sans fil.

Les moyens d'ajustement peuvent prendre en compte la nature du moyen de communication entre le dispositif de capture et l'hôte dans le calcul de la valeur du gain. Typiquement, on peut ajuster le gain de sorte que les données transmises à l'hôte soient de suffisamment petite taille pour que la transmission à l'hôte s'effectue sans saturation.

Selon un deuxième aspect, l'invention a pour objet une souris optique comprenant un dispositif de capture selon le premier aspect de l'invention. La souris peut comprendre une boule de commande ("trackball" en anglais), auquel cas les déplacements mesurés sont ceux de la boule, et la vitesse du dispositif de capture est la vitesse de la boule. La souris peut également être une souris optique classique, auquel cas les déplacements mesurés sont ceux de la souris elle-même relativement à un support tel qu'une table, un tapis de souris etc., et la vitesse du dispositif de capture est la vitesse de la souris relativement à ce support. La souris peut également être une souris 3D.

Alternativement, le dispositif de capture peut être (ou être compris dans) un écran tactile ("touchpad" en anglais) ou un bouton de commande ("trackpoint" en anglais), auxquels cas les déplacements mesurés sont ceux d'un doigt d'un utilisateur sur l'écran tactile ou sur le bouton respectivement. La vitesse du dispositif de capture est alors la vitesse de l'écran (respectivement du bouton), relativement au doigt, ce qui revient à la vitesse du doigt relativement à l'écran (respectivement du bouton).

Alternativement, le dispositif de capture peut être (ou être compris dans) une tablette graphique, auquel cas les déplacements mesurés sont ceux d'un outil, par exemple un stylet, sur une surface de la tablette. Là encore, la vitesse du dispositif de capture est égale à la vitesse de l'outil sur la surface de la tablette.

L'invention n'est donc en rien limitée par la nature du dispositif de capture. Le dispositif de capture peut aussi être (ou être compris dans) un « manche à balai » ("joystick" en anglais).

Selon un troisième aspect, l'invention a pour objet un système de capture du mouvement comprenant le dispositif de capture selon le premier aspect de l'invention et un dispositif hôte apte à communiquer avec le dispositif de capture. Le système de capture peut par exemple comprendre une souris optique et une unité centrale d'un ordinateur.

Selon un quatrième aspect, l'invention a pour objet un procédé destiné à être mis en oeuvre par un dispositif de capture de mouvement agencé pour communiquer avec un dispositif hôte en vue d'une saisie du mouvement capturé, ledit procédé comprenant les étapes consistant à modifier un gain en fonction au moins d'une vitesse du dispositif de capture, et à pondérer par le gain une mesure de déplacement du dispositif de capture.

Bien entendu, les modifications du gain et les pondérations peuvent être effectuées à des fréquences différentes. Par exemple, le gain peut être réajusté seulement après une centaine de pondérations.

Selon un cinquième aspect, l'invention a pour objet un programme d'ordinateur destiné à être stocké dans une mémoire d'un dispositif de capture de mouvement apte à communiquer avec un dispositif hôte en vue d'une saisie du mouvement capturé, comprenant des instructions pour

- recevoir des données d'un capteur du dispositif de capture,
- déterminer une mesure de déplacement du dispositif de capture à partir des données reçues du capteur,
- pondérer ladite mesure de déplacement par un gain, et

- modifier le gain en fonction au moins d'une vitesse du dispositif de capture.

D'autres particularités et avantages de la présente invention apparaîtront dans la description de modes de réalisation ci-après.

La figure 1, déjà commentée, montre un exemple de système de capture connu de l'art antérieur.

La figure 2 montre un exemple de système de capture selon un mode de réalisation de l'invention.

La figure 3 est un organigramme d'un exemple de procédé selon le mode de réalisation de la figure 2.

La figure 4 est un graphique représentant un exemple de variation du gain en fonction de la vitesse du dispositif de capture, selon le mode de réalisation de la figure 2.

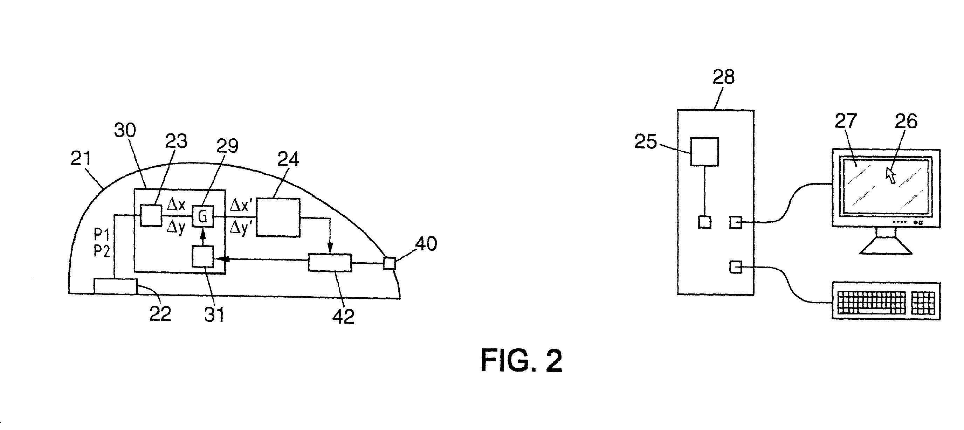

Les figures 2, 3 et 4 correspondent au même mode de réalisation et seront commentées simultanément.

Le système de capture représenté sur la figure 2 comprend un dispositif de capture et un dispositif hôte, dans ce mode de réalisation respectivement une souris optique 21 et une unité centrale 28 d'un ordinateur.

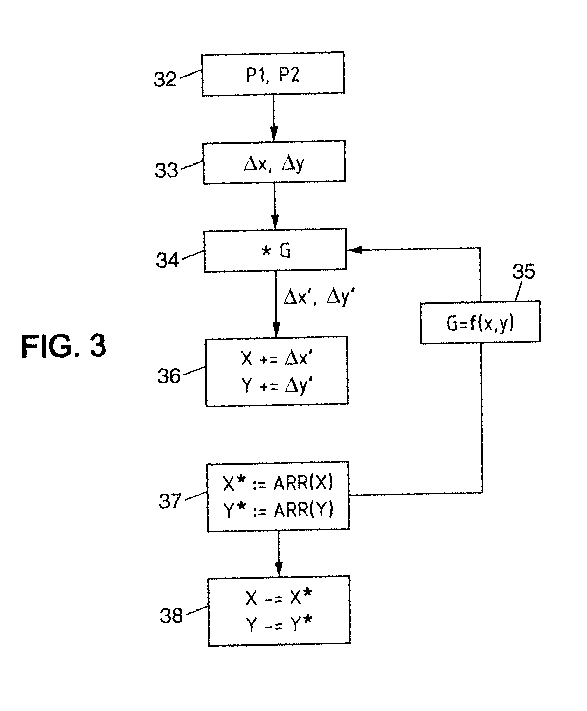

La souris 21 comprend un capteur optique et une lentille, représentés sous la référence 22. Le capteur capture des données d'image P1, P2 et transmet ces données d'image à des moyens de détermination du déplacement 23. Les données d'image P1, P2 correspondent typiquement à des images captées à des instants donnés. Les moyens de détermination reçoivent les données d'image (étape 32 sur la figure 3). En comparant les données d'image P1, P2 captées entre deux instants, les moyens de détermination 23 permettent de déterminer une mesure de déplacement ($\Delta x$, $\Delta y$) suivant deux dimensions x, y, correspondant à un intervalle de temps entre ces deux instants (étape 33 sur la figure 3).

Chaque mesure de déplacement ($\Delta x$,$\Delta y$) est comptabilisée en coups, chaque coup correspondant à un 32$^{ème}$ de point.

Par exemple, pour un capteur associant un point à une distance de 30 $\mu$m, et une lentille avec un gain de 2, un déplacement réel de 25,4 mm (un pouce) dans une direction x ou y correspond à la valeur entière

de $\dfrac{25,4}{2*30*10^{-3}} * 32$ , soit 13546 coups.

Des moyens de pondération 29 permettent de pondérer les mesures de déplacement par un gain G (étape 34 sur la figure 3). Le gain G est égal à un gain motion_scaling divisé par 256, du fait de décalages au sein d'un registre dans lequel est provisoirement stockée la mesure de déplacement ($\Delta x$,$\Delta y$).

Le gain motion_scaling peut être modifié par des moyens d'ajustement du gain 31, en fonction de la vitesse de la souris.

Les moyens 23, 29, 31 peuvent être intégrés dans des mêmes moyens de traitement, par exemple un processeur 30.

Le processeur 30 est relié à un accumulateur 24. Chaque mesure de déplacement pondérée ($\Delta x$', $\Delta y$') est transmise à l'accumulateur 24 et ajoutée (étape 36 sur la figure 3) à une mesure de déplacement accumulée (X, Y) suivant deux dimensions x, y.

L'accumulateur 24 est agencé pour permettre la mémorisation de valeurs relativement élevées, pour chaque dimension x, y, de la mesure de déplacement accumulée (X, Y), afin d'éviter les problèmes liés à une éventuelle saturation ("overflow" en anglais).

Pour chaque dimension x, y, les valeurs mémorisées sont lues et tronquées (étape 37 sur la figure 3), puis reçues dans un registre de transmission 42, à des fins de transmission à un registre d'un processeur 25 de l'unité centrale 28. Des moyens de communication incluant le registre 42 sont prévus à cet effet.

Dans le cas d'une souris sans fil, un protocole de communication sans fil peut être prévu pour la transmission du nombre de coups accumulés au processeur 25. Outre le registre 42, les moyens de communication peuvent entre autres comprendre un émetteur/récepteur sans fil 40.

Dans le cas non représenté sur la figure 2 d'un bus USB fonctionnant selon la spécification HID, les moyens de communication peuvent entre autre comprendre un fil entre la souris et l'unité centrale.

Après chaque lecture, et pour chaque direction, la valeur tronquée est retranchée à la valeur mémorisée dans l'accumulateur 24 (étape 38 sur la figure 3). Alternativement, l'accumulateur 24 peut être remis à zéro...

L'accumulateur 24 continue de recevoir des valeurs de nombre de coups pondérés entre deux lectures.

En outre, pour chaque direction x, y, la valeur reçue dans le registre 42 est transmise aux moyens d'ajustement du gain 31. Les moyens d'ajustement du gain 31 déterminent (étape 35 sur la figure 3) en effet la valeur du gain motion_scaling, et donc du gain G, à partir de la mesure de déplacement accumulée (X, Y) lue dans l'accumulateur 24 lors de l'étape de lecture.

En effet, la mesure de déplacement accumulée (X, Y) correspond au déplacement capturé entre deux lectures de l'accumulateur. Si les lectures de l'accumulateur ont lieu à intervalles réguliers, la mesure de déplacement accumulée (X, Y) est représentative de la vitesse de la souris. A partir des valeurs dans les directions x, y de la mesure accumulée (X,Y), et de la valeur courante du gain motion_scaling, le processeur 30 peut aisément déterminer une valeur sensiblement proportionnelle à la vitesse de la souris.

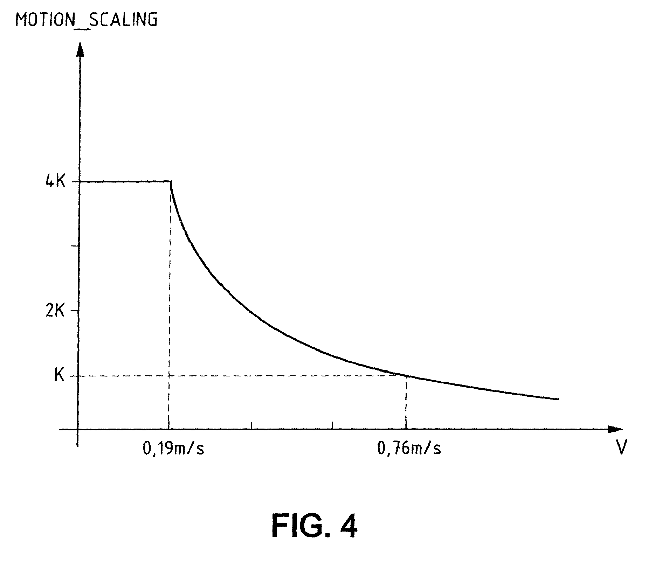

La figure 4 est un graphique représentant un exemple de variation du gain motion_scaling en fonction de la vitesse de la souris.

Dans cet exemple, le gain motion_scaling est exprimé en multiples de d'une valeur K égale à 8.

Tant que la vitesse de la souris est inférieure à 0,19 m/s, le gain motion_scaling est égal à 32, soit un gain G de 0,125 compte tenu des décalages du registre à décalage. Un déplacement réel de 25,4 millimètres (un pouce) dans l'une des directions x, y correspond ainsi à 1693 coups, soit un paramètre CPI de 1693 coups par pouce. Par abus de langage, on parle d'un paramètre CPI de 1600 coups par pouce.

Le gain motion_scaling diminue au-delà du seuil des 0,19 m/s.

En effet, le protocole de transmission sans fil utilisé dans le mode de réalisation illustré prévoit que, pour chaque direction de déplacement x ou y, 8 bits signés de données peuvent être transmis toutes les 10 millisecondes, soit 12700 coups (positifs ou négatifs) par seconde. Pour une valeur du paramètre CPI de 1600 CPI, cette limitation correspond à une vitesse maximale de la souris dans l'une des directions x, y de

$$\frac{12700}{1693} * 25,4.10^{-3}$$ mètre par seconde, soit sensiblement 0,19 m/s.

La diminution du gain motion_scaling pour des vitesses supérieures à 0,19 m/s permet d'éviter des problèmes de saturation lors de la transmission de la valeur accumulée à l'unité centrale. Les moyens d'ajustement du gain 31 sur la figure 2 prennent ainsi en compte la bande passante du canal permettant la transmission de la valeur mémorisée dans l'accumulateur vers le dispositif hôte.

Pour une vitesse de souris de 0,76 m/s, le gain motion_scaling tombe à 8, soit une valeur du paramètre CPI de 423 CPI. En effet, compte tenu de la fréquence de rafraîchissement prévue par la spécification HID, la vitesse maximale de la souris pour une valeur du paramètre CPI de 423 CPI est de $\frac{12700}{423} * 25,4.10^{-3}$ mètre par seconde, soit sensiblement 0,76 m/s.

Dans cet exemple, la valeur du gain motion_scaling varie en 1/x avec la vitesse, lorsque la vitesse de la souris est supérieure à 0,19 m/s. Les moyens d'ajustement du gain sont ainsi agencés pour, au-delà des 0,19 m/s, utiliser sensiblement au maximum la bande passante du canal permettant la transmission de la valeur mémorisée dans l'accumulateur vers le dispositif hôte.

Bien entendu, l'invention n'est pas limitée par une telle courbe. En particulier, on peut prévoir de systématiquement sous-utiliser la bande passante de ce canal. En effet, c'est la mesure accumulée précédente qui sert de base au calcul du gain : prévoir une marge de sécurité permet d'éviter la saturation du canal en cas d'augmentation de la vitesse de la souris. La marge de sécurité peut par exemple être fixe, c'est-à-dire que la courbe représentant les variations du gain motion_scaling en fonction de la vitesse a la même allure que la courbe de la figure 4, mais avec des valeurs de gain motion_scaling décalées d'une même valeur.

On peut également prévoir des variations linéaires avec la vitesse, ou bien des variations brutales par paliers. Selon l'application souhaitée, on peut également prévoir un gain motion_scaling à basses vitesses plus élevé ou plus faible que 4*K, un seuil de vitesse au-delà duquel le gain motion_scaling diminue différent etc.

Si par exemple, les valeurs X, Y lues dans l'accumulateur sont égales à +42 et -103 coups respectivement, pour un gain motion_scaling courant de 16, le processeur 30 sur la figure 2 peut calculer une vitesse de la souris, ou tout au moins une valeur sensiblement proportionnelle à la vitesse de la souris. Le déplacement correspondant de la souris est sensiblement égal à

$$\sqrt{(42^2+103^2)} * \frac{256}{16} * \frac{1}{32} * 2 * 30.10^{-6}, \quad \text{soit}$$

sensiblement 3,34 millimètres. Si les valeurs X, Y sont lues avec une fréquence de rafraîchissement de 10 millisecondes, ce déplacement correspond à une vitesse de 0,334 m/s. Le gain motion_scaling peut alors être réajusté grâce à cette nouvelle valeur de la vitesse. En se référant à la courbe de la figure 4, le gain motion_scaling prend alors une valeur autour de 18,2.

Ainsi, en 10 millisecondes, le gain motion_scaling est passé d'une valeur égale à 16 à une valeur égale à 18 environ. Afin d'éviter de telles variation du gain, on peut prévoir d'utiliser une moyenne des vitesses sur une plus longue durée, de l'ordre du dixième de seconde par exemple, ou bien encore une somme des mesures de déplacements accumulés sur plusieurs cycles de lecture.

Dans un mode de réalisation alternatif et non représenté, on peut prévoir au contraire de réajuster le gain avec une fréquence de réajustement bien plus élevée, par exemple, à chaque acquisition d'une mesure de déplacement (Δx,Δy).

Pour revenir à la figure 2, la mesure transmise de la souris vers l'unité centrale est reçue dans le processeur 25, permettant ainsi la saisie du mouvement capturé par la souris. Un programme pilote mis en oeuvre par le processeur 25 peut être utilisé pour amplifier chaque valeur de nombre de coups accumulés reçue d'un facteur donné. Le programme pilote permet également de déplacer sur un écran 27 un pointeur 26 d'un nombre de pixels sensiblement proportionnel à la valeur amplifiée. Les mouvements du pointeur 26 sur l'écran sont ainsi sensiblement proportionnels au mouvement capturé par le capteur 22.

Dans ce mode de réalisation, au-delà des 0,19 m/s, le gain de la souris est sensiblement aussi élevé que possible compte tenu de la bande passante du canal entre la souris et l'unité centrale. Les pertes de précision liées à la quantification en nombre de coups sont donc relativement faibles. De plus, le facteur appliqué par le programme pilote peut être relativement faible, de sorte que le pointeur 26 se déplace de façon relativement précise.

**Revendications**

1. Dispositif de capture de mouvement (21) destiné à communiquer avec un dispositif hôte (28) en vue d'une saisie du mouvement capturé, comprenant des moyens de pondération (29) pour pondérer des mesures de déplacement par un gain, et des moyens d'ajustement du gain (31) en fonction au moins d'une vitesse du dispositif de capture.

2. Dispositif de capture (21) selon la revendication 1, dans lequel les moyens d'ajustement du gain (31) sont agencés pour modifier le gain en fonction d'au moins une mesure de déplacement ($\Delta$x,$\Delta$y) précédemment acquise.

3. Dispositif de capture (21) selon la revendication 2, dans lequel les moyens d'ajustement du gain (31) sont agencés pour modifier le gain en fonction d'une somme (X, Y) d'un nombre déterminé de mesures de déplacement ($\Delta$x,$\Delta$y) précédemment acquises.

4. Dispositif de capture (21) selon la revendication 3, comprenant en outre un accumulateur (24) relié aux moyens de pondération (29), l'accumulateur permettant de recevoir des mesures de déplacement pondérées ($\Delta$x',$\Delta$y') et de mémoriser une mesure de déplacement accumulée (X, Y), des moyens de communication comprenant un registre de transmission (42) agencé pour recevoir une mesure de déplacement accumulée lue dans l'accumulateur, les moyens de communication étant agencés pour communiquer au dispositif hôte (28) la valeur reçue dans le registre de transmission.

5. Dispositif de capture selon la revendication 4, dans lequel les moyens d'ajustement du gain (31) sont reliés au registre de transmission, afin de modifier le gain en fonction d'au moins une mesure lue dans l'accumulateur.

6. Dispositif de capture (21) selon l'une des revendications précédentes comprenant en outre des moyens de mesure (22, 23) du déplacement du dispositif de capture, lesdits moyens de mesure étant reliés aux moyens de pondération (29).

7. Dispositif de capture (21) selon la revendication 5, dans lequel les moyens de mesure comprennent un capteur optique (22) pour capturer des données d'images, et des moyens de détermination de déplacement (23) pour déterminer un déplacement à partir des données d'images capturées.

8. Souris optique, comprenant un dispositif de capture selon l'une des revendications 1 à 7.

9. Système de capture comprenant un dispositif de capture (21) selon l'une des revendications 1 à 7, et le dispositif hôte (28), ledit dispositif hôte étant agencé pour communiquer avec le dispositif de capture.

10. Procédé destiné à être mis en oeuvre par un dispositif de capture de mouvement agencé pour communiquer avec un dispositif hôte en vue d'une saisie du mouvement capturé, ledit procédé comprenant les étapes consistant à modifier (35) un gain en fonction au moins d'une vitesse du dispositif de capture, pondérer (34) par le gain une mesure de déplacement du dispositif de capture ($\Delta$x,$\Delta$y).

11. Produit programme d'ordinateur destiné à être stocké dans une mémoire d'un dispositif de capture de mouvement destiné à communiquer avec un dispositif hôte en vue d'une saisie du mouvement capturé, comprenant des instructions pour recevoir des données (P1, P2) d'un capteur du dispositif de capture, déterminer une mesure de déplacement du dispositif de capture ($\Delta$x, $\Delta$y) à partir des données reçues du capteur, pondérer ladite mesure de déplacement par un gain (G), et régulièrement modifier le gain en fonction au moins d'une vitesse (X,Y) du dispositif de capture.

**FIG. 1**
(ART ANTÉRIEUR)

FIG. 2

**FIG. 3**

```
32 ──┤ P1, P2 │
         │
         ▼
33 ──┤ Δx, Δy │
         │
         ▼
34 ──┤  * G   │◄──────────────┐
         │                     │
      Δx', Δy'          35 ──┤ G=f(x,y) │
         │                     │
         ▼                     │
36 ──┤ X += Δx'              │
       Y += Δy' │            │
                             │
37 ──┤ X* := ARR(X)          │
       Y* := ARR(Y) ├────────┘
         │
         ▼
38 ──┤ X -= X*
       Y -= Y* │
```

FIG. 4

**EP 1 860 529 A1**

**Office européen des brevets**

## RAPPORT DE RECHERCHE EUROPEENNE

Numéro de la demande

EP 07 10 8367

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 574 994 A (ST MICROELECTRONICS SRL [IT]; ST MICROELECTRONICS SA [FR]) 14 septembre 2005 (2005-09-14) * alinéas [0019], [0020], [0024], [0025], [0031], [0041] - [0043], [0058] - [0067]; figure 3 *<br>----- | 1-11 | INV. G06F3/033 |
| X | US 2005/001817 A1 (LAUFFENBURGER JAMES HAROLD [US] ET AL) 6 janvier 2005 (2005-01-06) * alinéas [0006], [0017], [0020], [0030], [0034], [0035], [0047] - [0054]; figures 1-3 *<br>----- | 1-11 | |
| X | EP 1 182 606 A (AGILENT TECHNOLOGIES INC [US]) 27 février 2002 (2002-02-27) * alinéas [0016], [0017], [0034]; figures 4,6 *<br>----- | 1-11 | |
| A | US 5 191 641 A (YAMAMOTO YASUSHI [US] ET AL) 2 mars 1993 (1993-03-02) * colonne 2, ligne 47 - colonne 4, ligne 34; figures 1,2 *<br>----- | 1 | DOMAINES TECHNIQUES RECHERCHES (IPC)<br><br>G06F |
| A | EP 1 291 810 A2 (MICROSOFT CORP [US]) 12 mars 2003 (2003-03-12) * alinéas [0006] - [0009]; figure 4 *<br>----- | 1,7 | |
| A | EP 0 742 510 A2 (AT & T CORP [US]) 13 novembre 1996 (1996-11-13) * colonne 3, ligne 40 - colonne 5, ligne 54; figures 1,2 *<br>----- | 1 | |
| A | EP 1 095 821 A2 (VISTEON GLOBAL TECH INC [US]) 2 mai 2001 (2001-05-02) * figure 2 * * alinéas [0026] - [0031] *<br>----- | 4 | |

Le présent rapport a été établi pour toutes les revendications

| Lieu de la recherche | Date d'achèvement de la recherche | Examinateur |
|---|---|---|
| Berlin | 20 juin 2007 | Chéron, Laurent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 860 529 A1**

## ANNEXE AU RAPPORT DE RECHERCHE EUROPEENNE
## RELATIF A LA DEMANDE DE BREVET EUROPEEN NO.

EP 07 10 8367

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-06-2007

| Document brevet cité au rapport de recherche | | | Date de publication | Membre(s) de la famille de brevet(s) | | | Date de publication |
|---|---|---|---|---|---|---|---|
| EP 1574994 | A | | 14-09-2005 | AUCUN | | | |
| US 2005001817 | A1 | | 06-01-2005 | EP | 1644814 | A2 | 12-04-2006 |
| | | | | WO | 2005006169 | A2 | 20-01-2005 |
| EP 1182606 | A | | 27-02-2002 | JP | 2002091689 | A | 29-03-2002 |
| | | | | TW | 594585 | B | 21-06-2004 |
| US 5191641 | A | | 02-03-1993 | AUCUN | | | |
| EP 1291810 | A2 | | 12-03-2003 | AUCUN | | | |
| EP 0742510 | A2 | | 13-11-1996 | CA | 2174687 | A1 | 11-11-1996 |
| | | | | JP | 9006537 | A | 10-01-1997 |
| | | | | US | 5793354 | A | 11-08-1998 |
| EP 1095821 | A2 | | 02-05-2001 | DE | 60020482 | D1 | 07-07-2005 |
| | | | | DE | 60020482 | T2 | 27-04-2006 |
| | | | | JP | 2001203584 | A | 27-07-2001 |
| | | | | US | 6513055 | B1 | 28-01-2003 |

EPO FORM P0460

Pour tout renseignement concernant cette annexe : voir Journal Officiel de l'Office européen des brevets, No.12/82